Europäisches Patentamt

European Patent Office

Office européen des brevets

(19)

(11) Veröffentlichungsnummer: **0 234 008**
**B1**

(12) **EUROPÄISCHE PATENTSCHRIFT**

(45) Veröffentlichungstag der Patentschrift:
31.01.90

(51) Int. Cl.⁴: **G01G 21/28**

(21) Anmeldenummer: **86116480.4**

(22) Anmeldetag: **27.11.86**

(54) **Präzisionswaage.**

(30) Priorität: **28.02.86 CH 835/86**

(43) Veröffentlichungstag der Anmeldung:
**02.09.87 Patentblatt 87/36**

(45) Bekanntmachung des Hinweises auf die Patenterteilung:
**31.01.90 Patentblatt 90/5**

(84) Benannte Vertragsstaaten:
**DE FR GB**

(56) Entgegenhaltungen:
**EP-A- 0 216 035**
**CH-A- 402 437**
**CH-A- 461 121**
**CH-A- 599 901**
**DE-C- 3 508 873**

(73) Patentinhaber: **Mettler Instrumente AG, Im Langacher,
CH-8606 Greifensee(CH)**

(72) Erfinder: **Lüchinger, Paul, Guldenstrasse 49,
CH-8610 Uster(CH)**

## Beschreibung

Gegenstand der Erfindung ist eine Präzisionswaage mit einer Waagschale und mit einem die Waagschale allseits umschliessenden Wägeraum, mit einem feststehenden Frontglas, je einer seitlich nach hinten verschiebbaren Schiebetür, einer nach hinten verschiebbaren oberen Abdeckung und die Schiebetüren mit der oberen Abdeckung verbindenden Halterung.

Präzisionswaagen der genannten Art sind bekannt. Im deutschen Gebrauchsmuster DE-M 7736324 ist eine Präzisionswaage gezeigt, bei der die beiden seitlichen Türen in herkömmlicher Weise nach hinten verschiebbar im Waagengehäuse geführt sind. Zusätzlich dazu ist die obere Abschlussfläche des Wägeraumes mit einer weiteren verschliessbaren Oeffnung versehen, welche aus einem nach hinten verschiebbaren Schiebefenster besteht.

Es ist auch eine Präzisionswaage mit einem fest angeordneten Frontglas bekannt, an dessen oberer Kante in einem Abstand von den seitlichen Kanten des Frontglases zwei das Frontglas mit dem Gehäuse der Waage verbindende Stege angebracht sind. Die Fläche zwischen den beiden Stegen kann nach hinten geschoben werden; die beiden Flächenabschnitte seitlich der beiden Stege sind mit den beiden seitlichen Schiebefenstern verbunden und zusammen mit diesen nach hinten verschiebbar.

Auf diese Weise lässt sich die seitliche Oeffnung vergrössern, bzw. die Zugänglichkeit zum Wägeraum geringfügig verbessern, so dass z.B. auch die Oeffnung eines auf der Waagschale stehenden Erlenmeier-Gefässes erreichbar wird.

Die wesentlichen Nachteile der bekannten Waagen, nämlich eine Zugänglichkeit des Wägeraumes sowohl von der Seite als auch von oben ohne hinderliche Rahmenteile zu erlangen, gelingt nicht mit den bekannten Anordnungen. Die Zugänglichkeit zum Wägeraum bleibt immer in irgendeiner Weise behindert.

Hier will die Erfindung Abhilfe schaffen. Die Erfindung, wie sie in den Ansprüchen gekennzeichnet ist, löst die Aufgabe, eine Präzisionswaage zu schaffen, bei der die seitlichen Schiebefenster und die obere Abdeckung eine Ausbildung aufweisen, welche bei deren Zurückschieben den Wägeraum seitlich und oben wahlweise vollständig oder auch nur teilweise freigibt. Die Erfindung bezweckt weiter, die Handhabung der Schiebefenster beim Wägen zu vereinfachen.

Die durch die Erfindung erreichten Vorteile sind im wesentlichen darin zu sehen, dass die vordere Begrenzungswand des Wägeraumes nur an deren unterer Kante mit dem Waagengehäuse verbunden ist, so dass beim Zurückschieben der seitlichen Schiebefenster sowie der oberen Abschlussfläche der Wägeraum vollständig freigelegt ist. Die Verwendung der bisher mit der vorderen Abschlussfläche des Wägeraumes fest verbundenen Rahmenteile für die seitlichen Schiebefenster und/oder die obere Abschlussfläche als bewegliche, die obere Abschlussfläche tragende und mit dieser zusammen bewegliche Halterung eröffnet die Möglichkeit, den Wägeraum auch von schräg oben ungehindert zugänglich zu machen. In den Griffen integrierte Riegel ermöglichen es, die verschiedenen Fenster und die Abdeckung bedarfsweise miteinander zu verbinden. Mit einer die beiden unteren Griffe verbindenden Platte können sowohl beide Schiebefenster gleichzeitig als auch je ein Fenster von der gegenüberliegenden Seite betätigt werden.

Im Boden des Waagengehäuses gleitende Führungen der Platte ermöglichen ein erschütterungsfreies Schieben der Fenster. Die beiden seitlichen Rahmenteile können sowohl als Aufnahme für die obere Abdeckung als auch als Führungen für die Schiebefenster und zudem als Nut für den Rollenkäfig dienen.

Mit einer federnden Abstützung der Führungsschiene für die Rahmenteile kann in vorteilhafter Weise erreicht werden, dass der Rahmen mit der oberen Abdeckung spiel- und erschütterungsfrei gleitet. Mit einem einzigen, an der Platte angreifenden motorischen Antrieb lassen sich bedarfsweise die jeweiligen Teile der Wägeraumverkleidung verschieben.

Im folgenden wird die Erfindung anhand von illustrierten Ausführungsbeispielen näher erläutert. Es zeigen:

Figur 1 eine perspektivische Darstellung einer Präzisionswaage mit teilweise zurückgeschebenem Seitenfenster und der oberen Abschlussfläche,

Figur 2 einen Querschnitt durch den Wägeraum parallel zum Frontglas,

Figur 3 einen Querschnitt durch eine obere Führung und

Figur 4 eine perspektivische Darstellung einer weiteren Präzisionswaage, bei der die obere Abdeckung nicht eben, sondern als Haube ausgebildet ist.

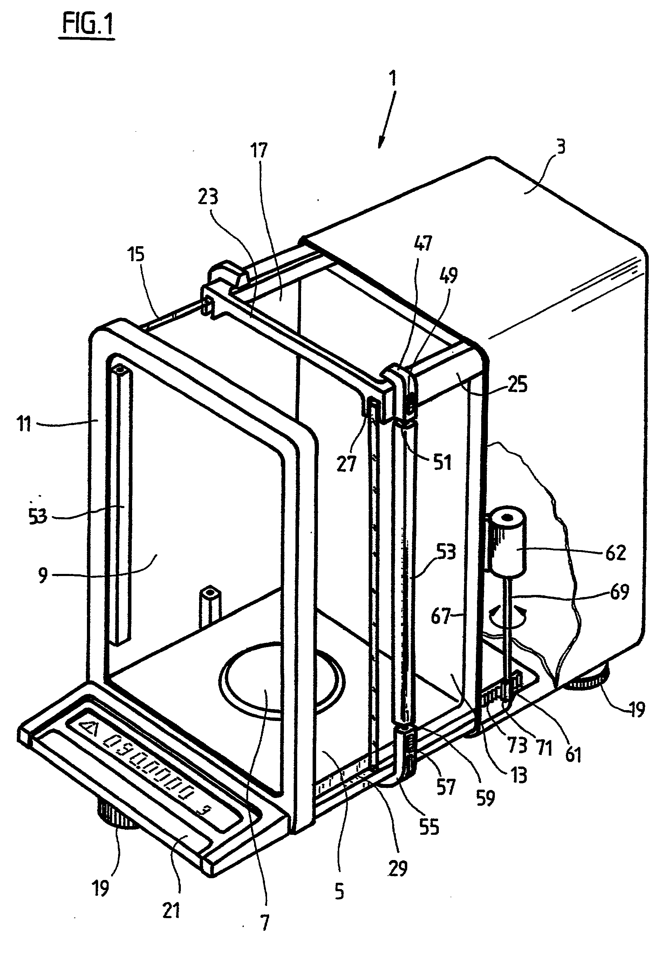

Die Figur 1 zeigt eine Präzisionswaage 1 mit dem den Wägemechanismus aufnehmenden Gehäuseteil 3, einem Wägeraum 5 mit der Waagschale 7, einem den Wägeraum 5 vorne abschliessenden Frontglas 9, das von einem Rahmen 11 umgeben sein kann, zwei seitlichen Schiebefenstern 13,15, welche nach hinten in das Waagengehäuse 3 einschiebbar sind sowie einer oberen Abdeckung 17, welche ebenfalls in das Waagengehäuse 3 zurückschiebbar ist. Die Waage 1 steht auf drei Stützfüssen 19, von denen der eine unterhalb der Anzeigetafel 21 angeordnet ist.

Die obere Abdeckung 17 ist mindestens seitlich von einer Halterung 23 umgeben, deren seitliche Teile 25 auf deren Unterseite eine im Querschnitt im wesentlichen U-förmige Ausnehmung 27 aufweisen, in der die obere Kante der seitlichen Schiebefenster 13 bzw. 15 eingreift. Die untere Kante der seitlichen Schiebefenster 13 bzw. 15 liegt auf einem Absatz 29 am Waagengehäuse 3 auf.

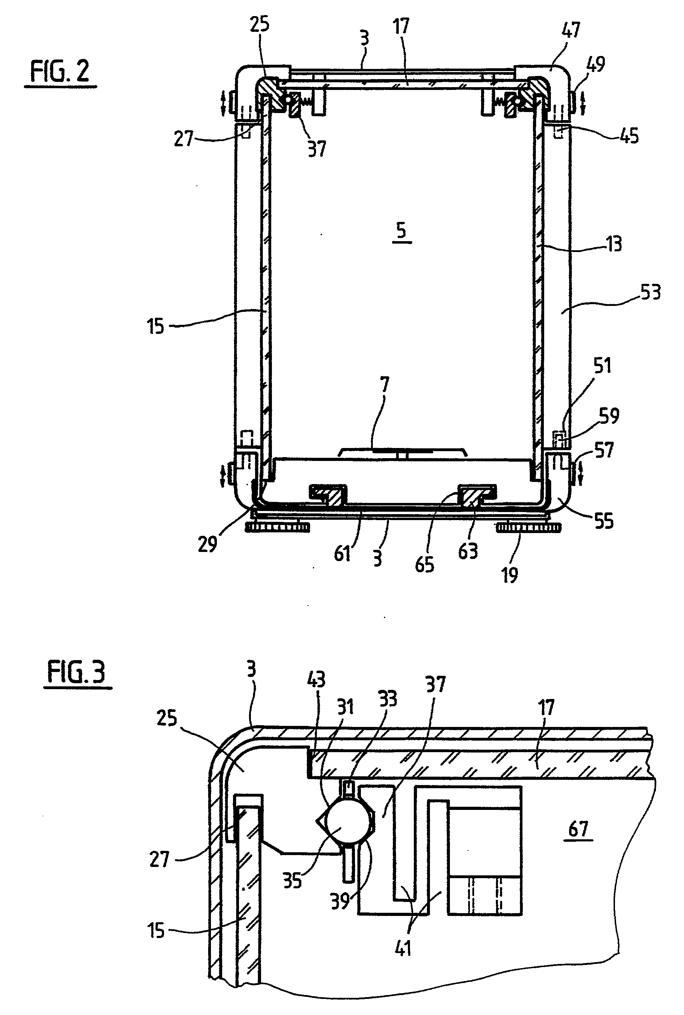

Die Seitenteile 25 der Halterung 23 weisen an den beiden einander zugewendeten Seiten eine Nut 31 auf, in welcher in einem Käfig 33 zusammengehaltene Kugeln 35 eingreifen, die an einer oben im Waagengehäuse 3 angeordneten Führungsschiene 37 mit einer Nut 39 geführt werden (Figur 3). Die Führungsschiene 37 ist vorzugsweise elastisch befestigt. Im Beispiel nach Figur 3 besteht die elastische Ausgestaltung der Führungsschiene 37 aus schlitzförmigen Ausnehmungen 41, welche die Führungsschiene 37 so weit schwächen, dass diese als Feder wirkt und mit Vorspannung montierbar ist. Selbstverständlich könnte die Führungsschiene 37 auch mittels einer Feder oder einem äquivalenten Mittel elastisch am Waagengehäuse 3 angebracht werden. An der oberen Kante der Halterung 23 ist ein Absatz 43 vorgesehen, in dem die obere Abdeckung 17, in unserem Fall eine Glasscheibe, eingelegt ist. Die Halterung 23 der oberen Abdeckung kann aus Metall oder aus einem geeigneten Kunststoff bestehen.

Anstelle einer Kugel- oder Rollenführung für die Halterung 23 kann auch ein Gleitlager aus metallischem Werkstoff oder aus Kunststoff treten. Die Halterung 23 kann weiter auch als mehrteilige Auszugsschiene ausgebildet sein, bei der zwei bewegliche Teile je die Hälfte des Auszugsweges zurücklegen.

Anstelle von zwei oberhalb der beiden Schiebefenster 13,15 angebrachten Rahmenteilen 25 kann auch ein einziger Rahmenteil in der Mitte der oberen Abdeckung 17 vorgesehen werden. In dieser Ausgestaltung wird die obere Abdeckung 17 aus oben umgebogenen Teilen der Schiebefenster 13,15 gebildet.

An den Seitenteilen 25 der Halterung 23 sind nahe der vorderen Kante auf beiden Seiten je Riegel 45 enthaltende Griffe 47 befestigt. Der in Figur 1 nicht sichtbare Riegel 45, z.B. ein zylindrischer Bolzen (Figur 2) ist durch einen vorzugsweise geriffelten, die Oberfläche des Griffes 47 leicht überragenden Schieber 49 betätigbar und greift in eine Vertiefung 51 an der Stirnfläche einer auf den seitlichen Schiebefenstern 13,15 befestigten Leiste 53 ein.

Analog zum Griff 47 an der Oberseite des Wägeraumes 5 ist auch an der Unterseite ein Griff 55 mit einem Schieber 57 und einem Riegel 59, der von unten in die Leiste 53 eingreift, angeordnet. Die beidseitig angebrachten Griffe 55 sind unter dem Waagengehäuse 3 und dem Wägeraum 5 mittels einer Platte oder eines Steges 61 miteinander verbunden. An der Platte 61 ist in der Mitte oder seitlich - wie in Figur 2 dargestellt - je eine Führungsschiene 63 befestigt, welche in entsprechenden Führungsnuten 65 am Boden des Waagengehäuses 3 bzw. des Wägeraumes 5 in Längsrichtung geführt sind. Anstelle von nutförmigen Führungen können selbstverständlich auch anders geformte oder Rollenführungen eingesetzt werden.

Die Platte 61 ist nur gerade im vorderen Teil so breit wie das Waagengehäuse 3. Der rückwärtige Teil weist beidseitig einen Einschnitt auf, damit bei vollständig zurückgeschobener Platte 61 diese nicht an den Füssen 19 anstossen kann, trotzdem aber eine genügend lange Führung vorliegt, welche ein Verkanten bei einseitigem Kraftangriff verhindert (Figur 1).

Die in Figur 1 über die gesamte Höhe der seitlichen Schiebefenster 13 und 15 verlaufenden Leiste 53 kann selbstverständlich nur aus kurzen Abschnitten bestehen, welche die Ausnehmung 51 für die Riegel 45 bzw. 59 aufweisen. Die Riegel 45,59 mit den Schiebern 49,57 können selbstverständlich auch in den Leisten 53 und die Ausnehmung 51 in den Griffen 47,55 am Rahmenteil 25 angeordnet sein. Die Riegel 45,59 sind vorzugsweise selbsthemmend in den Griffen 47,55 geführt, damit sie sowohl in vorgeschobener als auch zurückgeschobener Stellung verharren.

Mit einem motorischen Antrieb 62, der an der Rückwand 67 des Wägeraumes 5 befestigt ist und ein an einer vertikalen Welle 69 befestigtes Ritzel 71 aufweist, das in eine Verzahnung 73 an der Platte 61 eingreift, können die Platte 61 und mit dieser bedarfsweise auch die Schiebefenster 13,15 und die Abdeckung 17 bewegt werden. Der Antrieb 62 ist vorzugsweise so ausgebildet, dass die Möglichkeit besteht, diesen bei Handbetrieb von der Verzahnung 73 abzukoppeln.

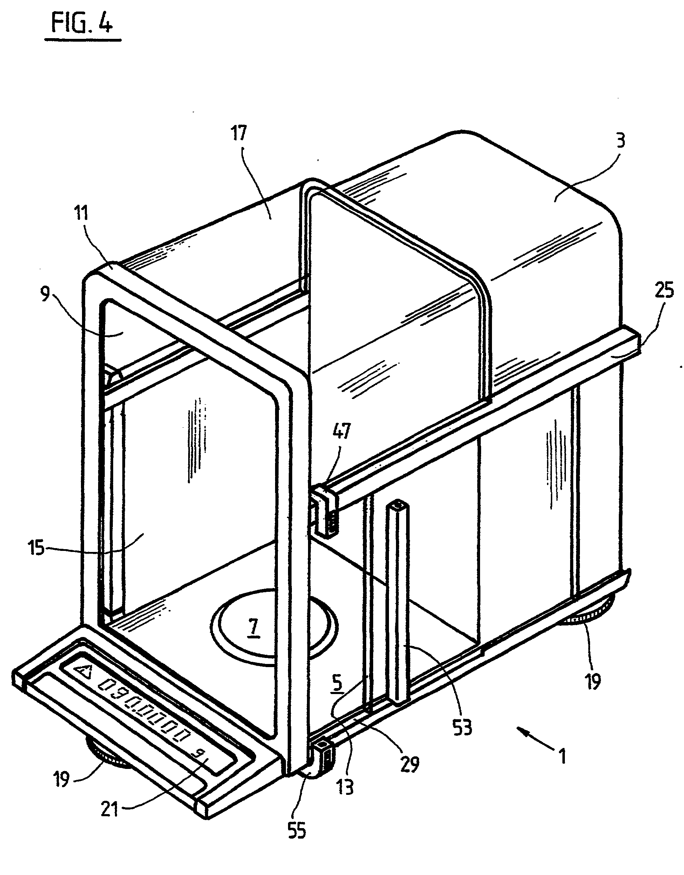

In Figur 4 ist eine weitere Ausführungsform der Erfindung gezeigt, bei der die obere Abdeckung 17 nicht aus einer planen, in der Halterung 23 eingelegten Glasplatte besteht, sondern als Haube ausgebildet ist, deren untere Kanten auf der Halterung 23 bzw. den Seitenteilen 25 aufliegen. Die Schiebetüren 13,15 wie auch die Haube gleiten beim Zurückschieben nicht in das Waagengehäuse 3 hinein, sondern über dieses hinweg. Demzufolge sind die Führungsschienen 37 aussen am Waagengehäuse 3 befestigt.

Die seitlichen Schiebefenster 13 und 15 sowie die obere Abdeckung 17 lassen sich bei der erfindungsgemässen Präzisionswaage 1 auf verschiedenste Weise öffnen: Es können sowohl die beiden seitlichen Schiebetüren 13 und 15 je einzeln oder synchron miteinander geöffnet werden und zwar mit oder ohne die obere Abdeckung 17; es können aber auch je ein seitliches Schiebefenster 13 oder 15 zusammen mit der oberen Abdeckung 17 oder aber nur die obere Abdeckung 17 allein geöffnet werden.

Zum synchronen Oeffnen von mehr als einer der Schiebetüren 13, 15, bzw. der oberen Abdeckung 17, werden die beiden miteinander zu öffnenden Teile durch den Riegel 45,59 am Griff 47,55 miteinander verkoppelt. So können beispielsweise das seitliche Schiebefenster 13 und die obere Abdeckung 17 durch Einschieben des Riegels 45 am vorderen Seitenteil 25 (vorne in Figur 1) miteinander verbunden und bewegt werden. Wenn zusätzlich noch das Schiebefenster 15 zum vollständigen Oeffnen des gesamten Wägeraumes 5 mit verschoben bzw. ebenfalls geöffnet werden soll, so muss auch der Riegel 45 am Seitenteil 25 über dem Schiebefenster 15 im Eingriff mit der Leiste 51 am Schiebefenster 15 gebracht werden.

Selbstverständlich können die obere Abdeckung 17 und ein Schiebefenster 13 oder 15 auch miteinander synchron verschoben werden, ohne die Verriegelung zu betätigen, wenn der Griff 47 und die Leiste 53 gleichzeitig erfasst und verschoben werden.

Damit auch die beiden seitlichen Schiebefenster 13 und 15 ohne die obere Abdeckung 17 synchron miteinander verschoben werden können, müssen die Riegel 59 an den unten liegenden und an der Platte 61 befestigten Griffen 55 von unten in die Leisten 51 und 53 eingeschoben werden. Wenn dann einer der Griffe 55 nach hinten geschoben wird, öffnet

synchron das gegenüberliegende seitliche Schiebefenster.

Es besteht damit auch die Möglichkeit, mit der linken Hand den beim seitlichen Schiebefenster l5 liegenden Griff 55, der nicht mit dem Seitenfenster l5 verriegelt ist, nach hinten zu schieben und so das seitliche Schiebefenster l3 und allenfalls mit diesem zusammen die obere Abdeckung l7 zu öffnen. Auf diese Weise kann mit der linken, meist freien Hand der Wägeraum 5 freigelegt und mit der rechten Hand in diesem gearbeitet werden.

Linkshänder öffnen das linke seitliche Schiebefenster l5 und allenfalls auch die obere Abdeckung l7, indem sie am Griff 55 unter dem rechten Schiebefenster l3 anfassen.

## Patentansprüche

l. Präzisionswaage mit einem Waagengehäuse und einer Waagschale, mit einem die Waagschale allseits umschliessenden Wägeraum, einem feststehenden Frontglas, je einer seitlich nach hinten verschiebbaren Schiebetür, einer nach hinten verschiebbaren oberen Abdeckung und einer Halterung mit die Schiebetüren mit der oberen Abdeckung verbindenden Seitenteilen, dadurch gekennzeichnet, dass die Seitenteile (25) an einer Führung (37) in das oder über das Waagengehäuse (3) schiebbar sind.

2. Präzisionswaage nach Anspruch l, dadurch gekennzeichnet, dass die obere Abdeckung (l7) mit der Halterung (23) verbunden und mit dieser verschiebbar ist.

3. Präzisionswaage nach Anspruch l oder 2, dadurch gekennzeichnet, dass eine oder beide Schiebetüren (l3 und/oder l5) durch Riegel (45) mit der oberen Abdeckung (l7) verbindbar sind derart; dass die seitlichen Schiebetüren (l3,l5) und die obere Abdeckung (l7) synchron verschiebbar sind.

4. Präzisionswaage nach einem der Ansprüche l bis 3, dadurch gekennzeichnet, dass die beiden seitlichen Schiebefenster (l3,l5) mittels einer unter dem Wägeraum (5) verschiebbar gelagerten Platte (6l) und daran befestigten Griffen (55) mit Riegeln (59) von einer Seite aus synchron verschiebbar sind.

5. Präzisionswaage nach Anspruch 4, dadurch gekennzeichnet, dass an der Platte (6l) parallel zu den seitlichen Schiebefenstern (l3,l5) verlaufende Führungsschienen (63) angebracht sind, welche in entsprechend ausgestalteten Führungsnuten (65) im Boden des Waagengehäuses (3) gelagert sind.

6. Präzisionswaage nach einem der Ansprüche l bis 5, dadurch gekennzeichnet, dass die Seitenteile (25) der Halterung (23) an der Unterseite eine Nut (27) zur Aufnahme der Oberkante der Schiebetüre (l3 bzw. l5) und an der zum Wägeraum (5) gerichteten Seite eine Führungsnut (3l) zur Aufnahme eines Käfigs (35) mit Rollen oder Kugeln und/ oder eines mitlaufenden Führungsteiles aufweisen.

7. Präzisionswaage nach Anspruch 6, dadurch gekennzeichnet, dass im Waagengehäuse (3) parallel zu den Schiebetüren (l3,l5) und den Führungsnuten (3l) gegenüberliegend in den Führungsschienen (37) eine Nut (35) zur Aufnahme des Käfigs (35) und/oder des mitlaufenden Führungsteiles angeordnet ist.

8. Präzisionswaage nach Anspruch 7, dadurch gekennzeichnet, dass die Führungsschiene (37) federnd abgestützt ist derart, dass der Käfig (35) und/oder das mitlaufende Führungsteil in den Nuten (3l und 39) längsverschiebbar gehalten wird.

9. Präzisionswaage nach Anspruch l, dadurch gekennzeichnet, dass die beiden Seitenteile (25) direkt nebeneinander über dem Wägeraum (5) liegen, und dass die beiden Schiebetüren (l3,l5) gekrümmt ausgebildet sind und zugleich die obere Abdeckung (l7) bilden.

l0. Präzisionswaage nach einem der Ansprüche 4 bis 9, dadurch gekennzeichnet, dass die Platte (6l) mit einem motorischen Antrieb (62) verbunden ist, mittels dem die Platte (6l) verschiebbar ist.

ll. Präzisionswaage nach einem der Ansprüche l bis 8 und l0, dadurch gekennzeichnet, dass die obere Abdeckung (l7) haubenförmig ausgebildet ist und die Seitenteile (25) der Halterung (23) an den unteren Kanten der Abdeckung (l7) angeordnet sind.

## Claims

1. A precision weighing machine comprising a weighing machine housing and a weighing pan, a weighing chamber which encloses the weighing pan on all sides, a fixed front glass, respective laterally rearwardly displaceable sliding doors, a rearwardly displaceable upper cover and a holding means with side members connecting the sliding doors to the upper cover, characterised in that the side members (25) are slidable on a guide (37) into or over the weighing machine housing (3).

2. A precision weighing machine according to claim 1 characterised in that the upper cover (17) is connected to the holding means (23) and is displaceable together therewith.

3. A precision weighing machine according to claim 1 or claim 2 characterised in that one or both sliding doors (13 and/or 15) can be connected to the upper cover (17) by locking members (45) in such a way that the lateral sliding doors (13, 15) and the upper cover (17) are synchronously slidable.

4. A precision weighing machine according to one of claims 1 to 3 characterised in that the two lateral sliding windows (13, 15) are synchronously displaceable from one side by means of a plate (61) which is mounted displaceably beneath the weighing chamber (5), and handles (55) secured to the plate, with locking members (59).

5. A precision weighing machine according to claim 4 characterised in that mounted on the plate (61) are guide rails (63) which extend parallel to the lateral sliding windows (13, 15) and which are mounted in guide grooves (65) of a corresponding configuration in the bottom of the weighing machine housing (3).

6. A precision weighing machine according to one of claims 1 to 5 characterised in that the side members (25) of the holding means (23) are provided at the underside with a groove (27) for receiving the top edge of the sliding doors (13 and 15 respectively) and at the side which is directed towards the weighing chamber (5) have a guide groove (31) for receiving a cage (35) with rollers or balls and/or a guide member which moves therewith.

7. A precision weighing machine according to claim 6 characterised in that arranged in the weighing machine housing (3) parallel to the sliding doors (13, 15) and in opposite relationship to the guide grooves (31), in the guide rails (37), is a groove (35) for receiving the cage (35) and/or the movable guide member.

8. A precision weighing machine according to claim 7 characterised in that the guide rail (37) is resiliently supported in such a way that the cage (35) and/or the movable guide member is longitudinally displaceably held in the grooves (31 and 39).

9. A precision weighing machine according to claim 1 characterised in that the two side members (25) are disposed in directly juxtaposed relationship above the weighing chamber (5) and that the two sliding doors (13, 15) are of a curved configuration and at the same time from the upper cover (17).

10. A precision weighing machine according to one of claims 4 to 9 characterised in that the plate (61) is connected to a motor drive (62) by means of which the plate (61) is displaceable.

11. A precision weighing machine according to one of claims 1 to 8 and 10 characterised in that the upper cover (17) is of a hoodlike configuration and the side members (25) of the holding means (23) are arranged at the lower edges of the cover means (17).

## Revendications

1. Balance de précision comportant un boîtier de balance et un plateau, comprenant une chambre de pesée enfermant de toutes parts le plateau, une vitre frontale fixe, une porte coulissante latérale de chaque côté, pouvant glisser vers l'arrière, un couvercle supérieur pouvant glisser vers l'arrière et un support comprenant des parties latérales de jonction entre les portes coulissantes et le couvercle supérieur, caractérisée par le fait que les parties latérales (25) peuvent glisser le long d'une glissière (37) de guidage dans ou par dessus le boîtier (3) de la balance.

2. Balance de précision selon la revendication 1, caractérisée par le fait que le couvercle supérieur (17) est relié au support (23) et peut être déplacé avec celui-ci.

3. Balance de précision selon la revendication 1 ou 2, caractérisée par le fait que l'une ou les deux portes coulissantes (13 et/ou 15) peuvent être reliées au couvercle supérieur (17) au moyen de verrous (45), de telle façon que les portes coulissantes latérales (13, 15) puissent être déplacées de façon synchrone avec le couvercle supérieur (17).

4. Balance de précision selon une des revendications 1 à 3, caractérisée par le fait que le déplacement synchrone des deux fenêtres coulissantes latérales (13, 15) peut être commandé unilatéralement, par l'intermédiaire d'une plaque (61) logée en dessous de la chambre (5) de pesée et des poignées (55) munies de verrous (59) et fixées sur cette plaque.

5. Balance de précision selon la revendication 4, caractérisée par le fait que la plaque (61) porte des rails (63) de guidage qui sont parallèles aux fenêtres coulissantes latérales (13, 15) et qui sont montés dans des rainures (65) de guidage ménagées de façon appropriée dans le fond du boîtier (3) de la balance.

6. Balance de précision selon une des revendications 1 à 5, caractérisée par le fait que les parties latérales (25) du support (23) portent, sur leur face inférieure, une gorge (27) destinée à recevoir le bord supérieur de la porte coulissante (13 ou 15) et, sur la face orientée vers la chambre (5) de pesée, une gorge (31) de guidage destinée à recevoir une cage (35) à rouleaux ou à billes et/ou une partie mobile de guidage.

7. Balance de précision selon la revendication 6, caractérisée par le fait qu'une gorge (35) destinée à recevoir la cage (35) et/ou la partie mobile de guidage est réalisée dans les glissières (37) de guidage, à l'intérieur du boîtier (3) de la balance, parallèlement aux portes coulissantes (13, 15) et face aux gorges (31) de guidage.

8. Balance de précision selon la revendication 7, caractérisée par le fait que la glissière (37) de guidage est supportée élastiquement de telle sorte que la cage (35) et/ou la partie mobile de guidage soient maintenues dans les gorges (31 et 39) tout en y coulissant longitudinalement.

9. Balance de précision selon la revendication 1, caractérisée par le fait que les deux parties latérales (25) sont juxtaposées et placées au dessus de la chambre (5) de pesée, et que les deux portes coulissantes (13, 15) sont recourbées et forment ainsi en même temps le couvercle supérieur (17).

10. Balance de précision selon une des revendications 4 à 9, caractérisée par le fait que la plaque (61) est reliée à une motorisation (62) par l'intermédiaire de laquelle la plaque (61) peut être déplacée.

11. Balance de précision selon une des revendications 1 à 8 et 10, caractérisée par le fait que le couvercle supérieur (17) est réalisé en forme de voûte et que les parties latérales (25) du support (23) sont disposées aux bords inférieurs du couvercle (17).

# FIG.1

FIG. 2

FIG. 3

FIG. 4